# EUROPÄISCHE PATENTSCHRIFT

(11) **EP 1 784 299 B1**
(45) Veröffentlichungstag und Bekanntmachung des Hinweises auf die Patenterteilung: **07.11.2012**
(21) Anmeldenummer: 05790233.0
(22) Anmeldetag: 02.09.2005
(51) Int. Cl.: B29C 73/16

(54) **VORRICHTUNG ZUM AUSBRINGEN VON LUFT- UND/ODER REIFENDICHTMITTEL**
DEVICE FOR DISCHARGING AIR AND/OR TIRE SEALANT
DISPOSITIF POUR EXPULSER DE L'AIR ET/OU UN PRODUIT COLMATANT DE PNEU

(30) Priorität: 02.09.2004 DE 102004042911
(43) Veröffentlichungstag der Anmeldung: 16.05.2007
(73) Patentinhaber: Illinois Tool Works, Inc., Glenview, IL 60026 (US)
(72) Erfinder: Stehle, Michael, 88662 Überlingen (EC)
(74) Vertreter: Weiss, Peter
(86) Internationale Anmeldenummer: PCT/EP2005/009458
(87) Internationale Veröffentlichungsnummer: WO 2006/024534

(56) Entgegenhaltungen:
- EP-A- 0 938 408
- WO-A-03/041949
- DE-A1- 10 106 468
- DE-C- 959 800
- FR-A- 1 072 149
- US-A- 2 646 707
- US-A- 2 689 675
- US-A1- 2004 159 365

## Beschreibung

Die vorliegende Erfindung betrifft eine Vorrichtung zum Ausbringen von Luft und/oder Reifendichtmittel aus einem Behälter in einen Reifen eines Fahrzeuges beliebiger Art, wobei dem Behälter zum Ausbringen von Reifendichtmittel ein Kolbenelement zugeordnet ist gemäß dem Anspruch 1 .

Bei herkömmlichen Systemen, Reifenreparatursystemen, Reifenreparatursets, wird in einen Behälter, gefüllt mit Reifendichtmittel, ein Ventil eingeführt und mit einem separaten Kompressor das Reifendichtmittel nach einem Verbinden des Behälters mit einem defekten Reifen eines Fahrzeuges, insbesondere Reifenventil eines Fahrzeuges, verbunden und dann das Reifendichtmittel in den defekten Reifen eingepumpt.

Nachteilig an herkömmlichen Systemen ist, dass diese sehr gross, komplex ausgebildet, teuer in der Herstellung sind und in einen Einbauraum eines Fahrzeuges, beispielsweise in einem Bereich eines Kofferraumes, viel Platz einnehmen.

Zudem sind diese schwer und beeinträchtigen auch das Gesamtgewicht eines Fahrzeuges.

Die WO 03/041949 A1 offenbart ein System zum Einbringen von Reifendichtmittel in einen Reifen, bei welchem ein Reifendichtmittelbehälter ein Kolbenelement aufweist gemäß dem Oberbegriff des Anspruchs 1 . Der Kolben wird mit einem separaten Pressluftgerät mit Druck versorgt, damit der Kolben das Reifendichtmittel in den Reifen einpressen kann.

Die US 2004/0159365 A1 offenbart ein herkömmliches Reifenpannenset, bei welchem mittels eines Kompressors Reifendichtmittel aus einem Reifendichtmittelbehälter in einen Reifen einpumpbar ist.

Die US 2,689,675 offenbart eine Vorrichtung zum Einpressen von Reifendichtmittel, enthaltend einen Kolben, wobei der Kolben mittels Luftdruck zum Ausbringen von Reifendichtmittel von einer externen Energiequelle beaufschlagt wird.

Die EP 0 938 408 offenbart ein herkömmliches Reifenpannenset, bei welchem mittels eines Kompressors ein Reifendichtmittelbehälter mit Druckluft beaufschlagt wird, aus welchem dann das Reifendichtmittel in einen Reifen eingepumpt wird.

Der vorliegenden Erfindung liegt daher die Aufgabe zugrunde, eine Vorrichtung zum Ausbringen von Luft und/oder Reifendichtmittel zu schaffen, welche die genannten Nachteile beseitigt und mit welcher auf einfache und kostengünstige Weise Reifendichtmittel in einen defekten Reifen ausgebracht werden kann. Dabei sollen herkömmliche Einbauräume genutzt werden können, eine Gewichtsreduzierung der gesamten Vorrichtung soll ferner erfolgen, wobei zusätzlich die Herstellungskosten gesenkt werden sollen. Zudem soll die Vorrichtung beliebig oft wiederverwendbar sein.

Zur Lösung dieser Aufgabe führen die kennzeichnenden Merkmale von Anspruch 1.

Bei der vorliegenden Erfindung hat sich als besonders vorteilhaft erwiesen, einen Behälter zur Aufnahme von Reifendichtmittel zu schaffen, welcher vorzugsweise zylindrisch, querschnittlich rund, oval, rechteckartig, quadratisch oder anders ausgeformt ausgebildet ist. Entsprechend der querschnittlichen Form des Behälters ist auch das dort eingesetzte Kolbenelement gebildet. Das Kolbenelement wird über eine Druckluftquelle, ausgeführt als Kompressor,

Radialverdichter, Membrankompressor, Rotationsverdichter od. dgl. hinter das Kolbenelement, beispielsweise mittels eines Gehäuses, angeschlossen, um das Kolbenelement zum Ausbringen von Reifendichtmittel aus einer Auslassöffnung gegen diese zu bewegen.

Ist das Reifendichtmittel vollständig aus dem Behälter ausgebracht, so lässt sich ein entsprechender Kolbendurchlass, ausgeführt ggf. als Ventil, freilegen bzw. öffnen, um anschliessend Druckluft oder komprimiertes beliebiges Medium oder Gas über den Behälter in einen Reifen einzubringen.

Ferner soll auch im Rahmen der vorliegenden Erfindung liegen, dass die Druckluftquelle als komprimierbarer Behälter ausgebildet sein kann, welcher dem Behälter zur Aufnahme von Reifendichtmittel unmittelbar hinter dem Kolbenelement aufsitzt. Vorzugsweise ist eine dichte, mechanische, wiederlösbare Verbindung zwischen Behälter und Gehäuse gebildet, um einen Druckraum zum Bewegen des Kolbenelementes zu schaffen.

Von Vorteil ist auch bei der vorliegenden Erfindung, dass ein Ausbringen und ein anschliessendes Einbringen von Druckluft zum Aufpumpen von Reifen in einem Arbeitsgang möglich ist. Dabei ist eine Vorrichtung geschaffen, die als Einheit aus Behälter und Gehäuse mit integriertem Kompressor gebildet ist, deren Baulänge und/oder Baugrösse reduziert ist, die auch ein geringes Gewicht aufweist und daher einen geringen Einbauraum bei geringen Herstellungskosten erfordert.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Teillängsschnitt durch eine Vorrichtung zum Ausbringen von Luft und/oder Reifendichtmittel aus einem Behälter in einen Reifen eines Fahrzeuges nach dem Stand der Technik;
Figur 2a einen schematisch dargestellten Teillängsschnitt durch eine weitere Vorrichtung zum Ausbringen von Luft und/oder Reifendichtmittel aus einem Behälter in einen Reifen eines Fahrzeuges;
Figur 2b einen Teillängsschnitt durch die Vorrichtung gemäss Figur 2a in einer weiteren Gebrauchslage;
Figur 3 einen schematisch dargestellten Teillängsschnitt durch ein weiteres Ausführungsbeispiel einer weiteren Vorrichtung zum Ausbringen von Luft und/oder Reifendichtmittel aus einem Behälter in einen Fahrzeugreifen;
Figur 4 einen schematisch dargestellten Teillängsschnitt durch ein weiteres Ausführungsbeispiel einer Vorrichtung zum Ausbringen von Luft und/oder Reifendichtmittel.

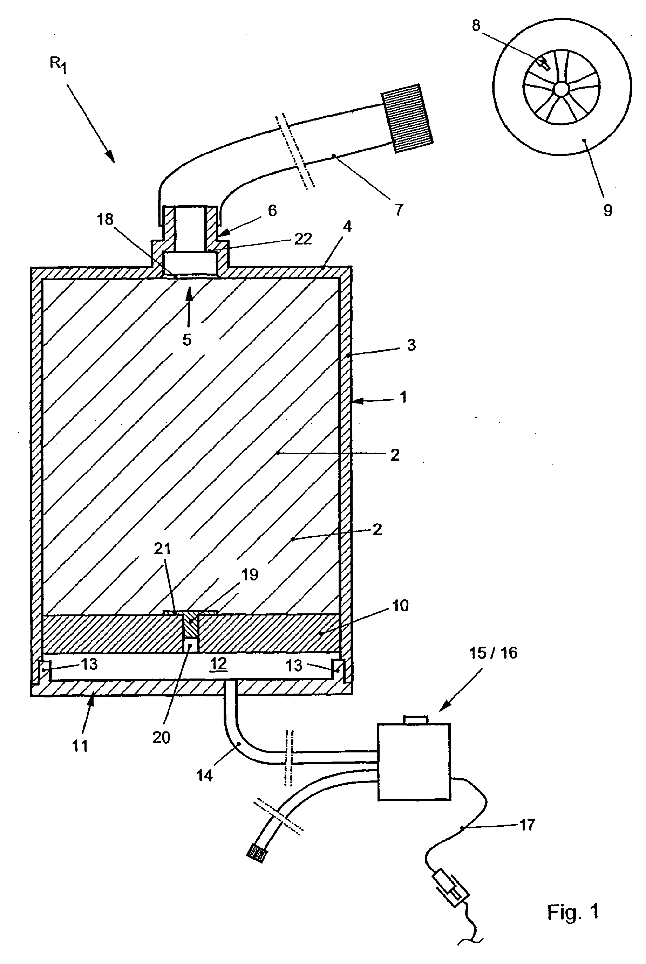

Gemäss Figur 1 weist eine erfindungsgemässe Vorrichtung R₁ einen Behälter 1 auf, welcher der Aufnahme von vorzugsweise flüssigem Reifendichtmittel 2 dient. Dabei ist der Behälter 1 aus einer Behälterwand 3 gebildet, die einends eine Stirnwand 4 mit integrierter bzw, gebildeter Auslassöffnung 5 den Behälter 1 in diesem Bereich verschliesst. An die Auslassöffnung 5 schliesst ein Auslass 6 an, an welchem beispielsweise ein Schlauch 7 anschliessbar oder fest angeschlossen ist, der dann beispielsweise auf ein Reifenventil 8 eines Reifens 9 eines beliebigen Fahrzeuges anschliessbar ist, um Reifendichtmittel 2 aus dem Behälter 1 in den beschädigten Reifen 9 auszubringen.

Dabei kann der Schlauch 7 als Druckschlauch ausgeführt sein und dem Behälter 1, insbesondere dem Auslass 6, fest oder wiederlösbar zugeordnet sein. Hierauf sei die Erfindung nicht beschränkt.

Bei der vorliegenden Erfindung hat sich als besonders vorteilhaft erwiesen, in den Behälter 1 ein Kolbenelement 10 zu integrieren, wobei das Kolbenelement 10 der Stirnwand 4 bzw. der Auslassöffnung 5 gegenüberliegend angeordnet, und zwischen Kolbenelement 10 und Stirnwand 4 im Behälter 1 das Reifendichtmittel 2 eingelagert ist. Die Behälterwand 3 ist zylindrisch, querschnittlich rund, oval, quadratisch, rechteckig od. dgl. ausgebildet, wobei querschnittlich das Kolbenelement 10 dem inneren Querschnitt der Behälterwand 3 in etwa entspricht. Das Kolbenelement 10 liegt dicht innen an der Behälterwand 3 an.

Endseits an die Behälterwand 3 lässt sich der Behälter 1 vorzugsweise luftdicht auf ein Gehäuse 11, vorzugsweise wiederlösbar, verbinden, wodurch zwischen Gehäuse 11 und dem Kolbenelement 10 ein Druckraum 12 gebildet ist.

Vorzugsweise ragen in seitlichen Bereichen des Gehäuses 11 zumindest teilweise oder vollständig umlaufende Stege 13 ab, die der wiederlösbaren Festlegung der Behälterwand 3 gegenüber dem Gehäuse 11 dienen.

Beispielsweise können innen oder aussen im Steg 13 entsprechende Ausnehmungen, Gewinde od. dgl. vorgesehen sein, die dann mit entsprechenden Ausnehmungen oder beispielsweise einem hier nicht näher dargestellten Innen- oder Aussengewinde der Behälterwand 3 des Behälters 1 in Eingriff stehen, um eine luftdichte Verbindung zwischen Gehäuse 11 und Behälter 1 zu schaffen.

In das Gehäuse 11, entweder seitlich oder von unten, lässt sich über eine Verbindungsleitung 14 eine beliebige Druckquelle, insbesondere Druckluftquelle 15 anschliessen, die beispielsweise als Kompressor 16 ausgebildet ist, um komprimierte Luft dem Druckraum 12 zuzuführen. Dabei kann die Druckluftquelle 15, sollte diese als elektromechanische Druckluftquelle bzw. Kompressor 16 ausgeführt sein, über eine externe, hier nur angedeutete Energiequelle 17, beispielsweise über einen Zigarettenanzünder eines Fahrzeuges, mit Strom gespeist werden. Über entsprechend hier nicht dargestellte Schalter oder Ventile lässt sich dann die Druckluftquelle 15 einschalten bzw, aktivieren.

Die Funktionsweise der vorliegenden Erfindung ist folgende:
Ist beispielsweise ein Reifen 9 eines beliebigen Fahrzeuges undicht, verursacht durch eine mechanische Beschädigung, wie beispielsweise ein Loch, Schnitt od. dgl., verursacht durch eine Glasscherbe oder einen Nagel, und tritt Luft aus dem Reifen aus, so wird der Behälter 1 mit dem Schlauch 7 an das Reifenventil 8 angeschlossen, und durch Einschalten der Druckluftquelle 15 wird ein Druck im Druckraum 12 erzeugt.

Der Behälter 3, insbesondere der Auslass 6, kann mittels einer Abdeckkappe verschlossen sein, jedoch ist im bevorzugten Ausführungsbeispiel die Auslassöffnung 5 mittels eines Verschlusselementes 18 verschlossen, das beispielsweise als aufbrechbare Membranfolie od. dgl. ausgebildet sein kann, die bei Überdruck im Behälter 3 aufbricht und die Auslaßöffnung 5 freigibt. Insbesondere durch die Erzeugung des Überdruckes im Druckraum 12 mittels des Kompressors 16 wird Druck über das Kolbenelement 10 auf das Innere des Behälters 1, insbesondere auf das Reifendichtmittel 2 ausgeübt, so dass dieses über die Auslassöffnung 5 über den Schlauch 7 in den Reifen 9 übertritt.

Dabei presst das Kolbenelement 10 den vollständigen Inhalt des Behälters 3 in den Reifen 9 ein, bis das Kolbenelement 10 an die Stirnwand 4 anschlägt. Dann wird durch weitere Druckerhöhung des sich vergrössernden Druckraumes 12 ein Ventil 19, welches dem Kolbenelement 10 vorzugsweise fluchtend mit der Auslassöffnung 5 eingesetzt ist, in den Auslass 6 beschleunigt und gibt einen Kolbendurchlass 20 frei. In dem Ventil 19, insbesondere in einer Ventilfläche 21, sind entsprechende Ausnehmungen, Öffnungen, Schlitze od. dgl. vorgesehen, welche bei einem Anliegen des Ventiles 19 an einem Flansch 22 des Auslasses 6 Luft in den Schlauch 7 durchlassen. Somit wird nach dem vollständigen Ausbringen des Reifendichtmittels in den Reifen gewährleistet, dass über den Druckraum 12 und über den Kolbendurchlass 20, über den Auslass 6, den Schlauch 7 dann Luft zum Aufpumpen des Reifens 9 direkt in einem Arbeitsaufgang eingebracht wird, ohne dass die Druckluftquelle 15 bzw. Kompressor 16 sowie das Gehäuse 11 mit Reifendichtmittel 2 od. dgl. beschmutzt oder verunreinigt werden. Nach dem Gebrauch lässt sich dann der Behälter 3 vom Gehäuse 11 lösen bzw. durch einen neuen unbenutzten Behälter, gefüllt mit Reifendichtmittel, austauschen und mit dem Gehäuse 11 wieder verbinden bzw. auf das Gehäuse 11 aufsetzen.

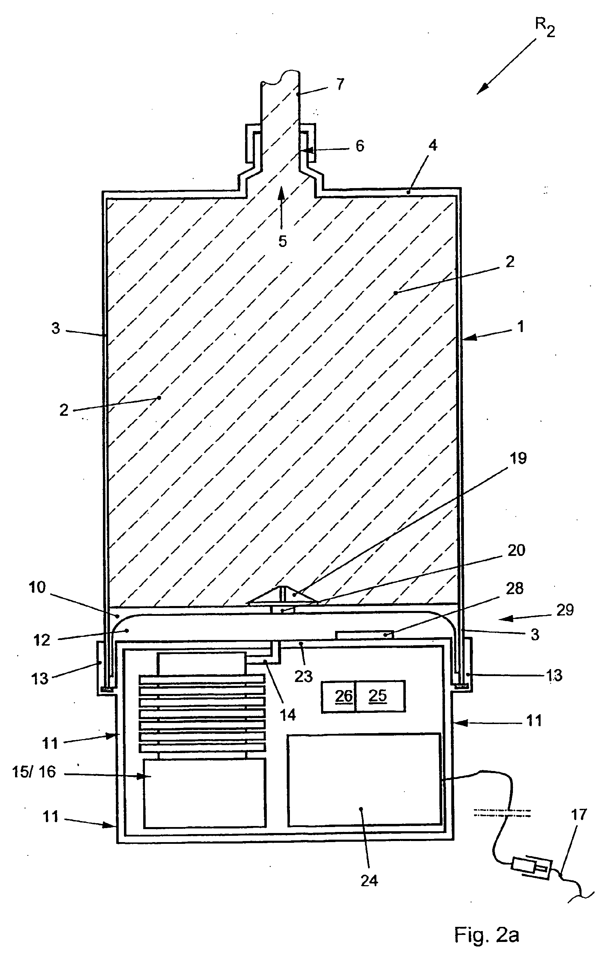

In dem Ausführungsbeispiel der vorliegenden Erfindung gemäss Figur 2a ist eine Vorrichtung R₂ aufgezeigt, die in etwa der oben beschriebenen Art entspricht. Unterschiedlich ist hier, dass zwischen einem Deckelelement 23 des Gehäuses 11 der vorbeschriebene Druckraum 12 zum Bewegen des Kolbenelementes 10 gegen die Auslassöffnung 5 bzw, gegen den Auslass 6 des Behälters 1 gebildet ist, wobei innerhalb des Gehäuses 1, vorzugsweise gekapselt und geschlossen, die Druckluftquelle 15 als Kompressor 16 mit Elektromotor 24 vollständig gekapselt eingesetzt ist. Dabei steht in oben beschriebener Weise über eine Verbindungsleitung 14 der Kompressor 16 mit dem Druckraum 12 in Verbindung und speist diesen Druckraum 12 mit Druckluft.

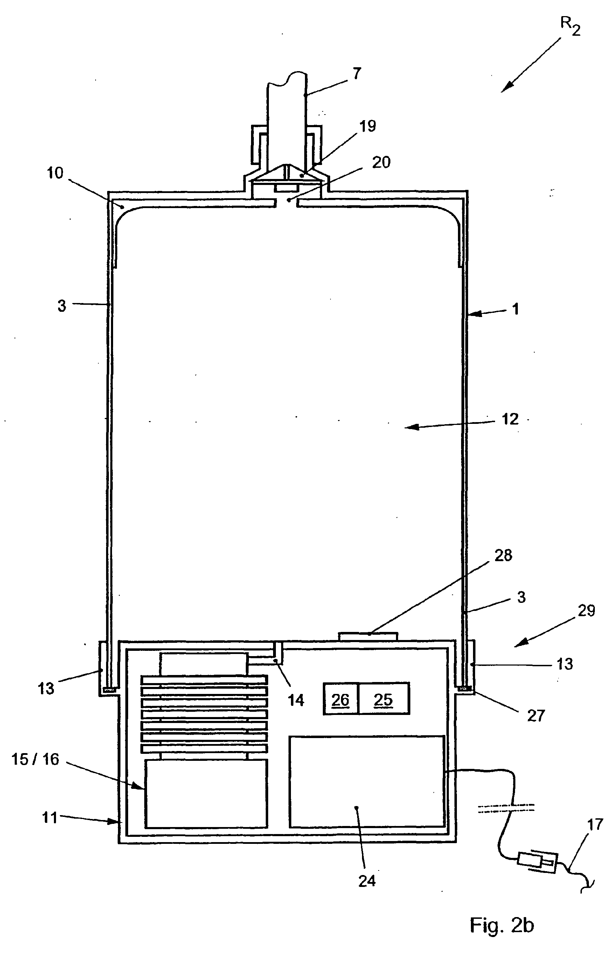

Über eine elektrische, hier nicht näher dargestellte Verbindungsleitung lässt sich ggf. über einen Schalter 25 der Kompressor 16 bzw. der Elektromotor 24 einschalten. Das Ausbringen von Reifendichtmittel 2 aus dem Behälter 1 mittels des Kolbenelementes 10 erfolgt in oben beschriebener Weise. Auch zum anschliessenden Aufpumpen des Reifens nach vollständiger Entleerung des Behälters 1, wie es in dem Ausführungsbeispiel gemäss Figur 2b dargestellt ist, erfolgt in oben beschriebener Weise, indem sich das Ventil 19 nach dem Anschlagen des Kolbenelementes 10 an der Stirnwand 4 des Behälters 1 ablöst, einen mit der Auslassöffnung 5 fluchtenden Kolbendurchlass 20 freigibt und über entsprechende, hier nicht näher dargestellte Öffnungen, Durchlässe od. dgl, in der Ventilfläche dann komprimierte Luft zum Aufpumpen des Reifens 9 über den Druckraum 12, durch den Kolbendurchlass 20, über den Auslass 6 und den Schlauch 7 in den Reifens 9 gelangt.

Im Gehäuse 11 und/oder der Druckluftquelle 15 angeordnet kann eine Druckanzeige 26 vorgesehen sein, um den Reifendruck zum Aufpumpen des Reifens 9 zu kontrollieren. Dabei kann beim vorliegenden Ausführungsbeispiel ähnlich in vorbeschriebener Weise endseits die Behälterwand 3 des Behälters 1 mit dem Gehäuse 11, vorzugsweise wiederlösbar, luftdicht verbunden werden, wobei ggf. ein Dichtelement 27 vorgesehen ist, um eine Abdichtung endseits der Behälterwand 3 mit dem Gehäuse 11 herzustellen.

Ferner soll im Rahmen der vorliegenden Erfindung liegen, dass beispielsweise im Gehäuse 11 im Bereich des Druckraumes 12 ein Drucksensor 28 vorgesehen ist, welcher der Überwachung und Steuerung des Druckes im Druckraum 12 dient. Dieser Drucksensor kann auch der Steuerung der Druckanzeige 26, beispielsweise beim Aufpumpen des Reifens, 9 dienen.

Im Rahmen der vorliegenden Erfindung soll auch liegen, dass als Druckluftquelle 15 eine beliebige Druckquelle, beispielsweise ausgeführt als komprimierbarer fester Druckbehälter, dienen kann, um komprimierte Luft zum Ausbringen von Reifendichtmittel und zum Aufpumpen eines Reifens 9 bereitzustellen.

Damit kann ein Gas oder Luft oder beliebiges gasförmiges Medium im festen Druckbehälter vorliegen, wobei lediglich über entsprechende Ventile dann der Druck im Druckraum zum Ausbringen von Reifendichtmittel und Aufpumpen eines Reifens geöffnet oder verschlossen werden kann. Der Druckbehälter soll wieder befüllbar sein, um das Gehäuse 11 wieder verwenden zu können.

Wichtig ist ferner bei der vorliegenden Erfindung, dass Behälter 1 sowie Gehäuse 11 eine Einheit 29 bilden, welche dann in einem herkömmlichen Einbauraum eines Fahrzeuges für herkömmliche Einfüllsysteme oder Reifenreparatursets passgenau einsetzbar ist, wobei ein zusätzlicher Raum für beispielsweise Ersatzbehälter noch verbleiben kann.

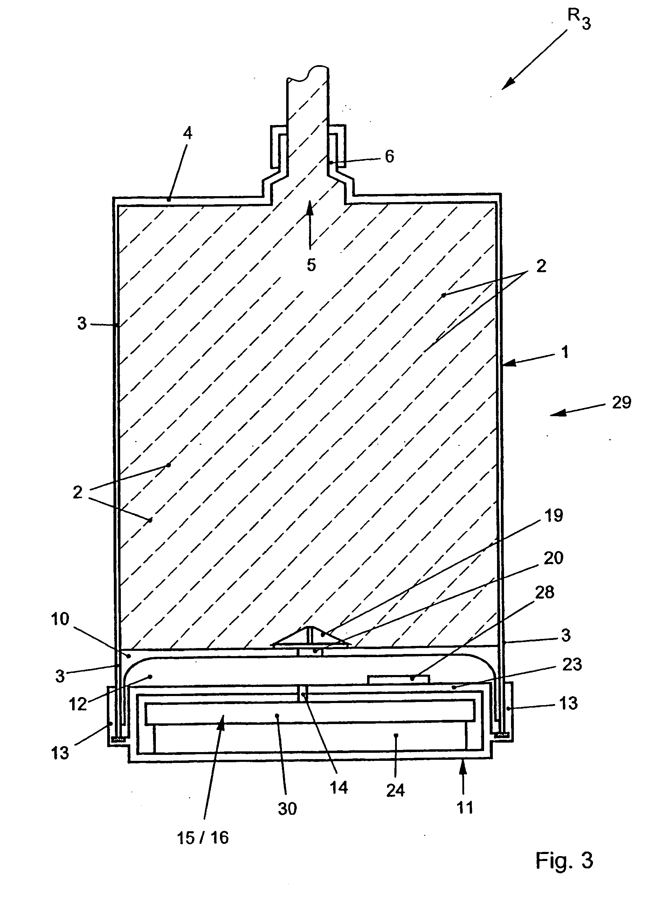

In einem weiteren Ausführungsbeispiel der vorliegenden Erfindung gemäss Figur 3 ist eine Vorrichtung R₃ aufgezeigt, die in etwa der o.g. Art gemäss den Figuren 2a und 2b entspricht. Unterschiedlich ist hier, um eine Gesamtbaulänge der Einheit 29, bestehend aus Behälter 1 und Gehäuse 11, zu reduzieren, als Druckluftquelle 15 bzw. Kompressor 16 einen Rotationsverdichter 30 einzusetzen, um über die Verbindungsleitung 14 Druckluft dem Druckraum 12 zuzuführen. Der Rotationsverdichter 30 wird über einen vorzugsweise sehr flach gehaltenen Elektromotor 24, wie er schematisch dargestellt ist, angetrieben. Auf diese Weise lässt sich bei gleichen vorbeschriebenen Funktionen die Gesamtbaulänge und Baugrösse der Einheit 29 der Vorrichtung R₃ erheblich reduzieren.

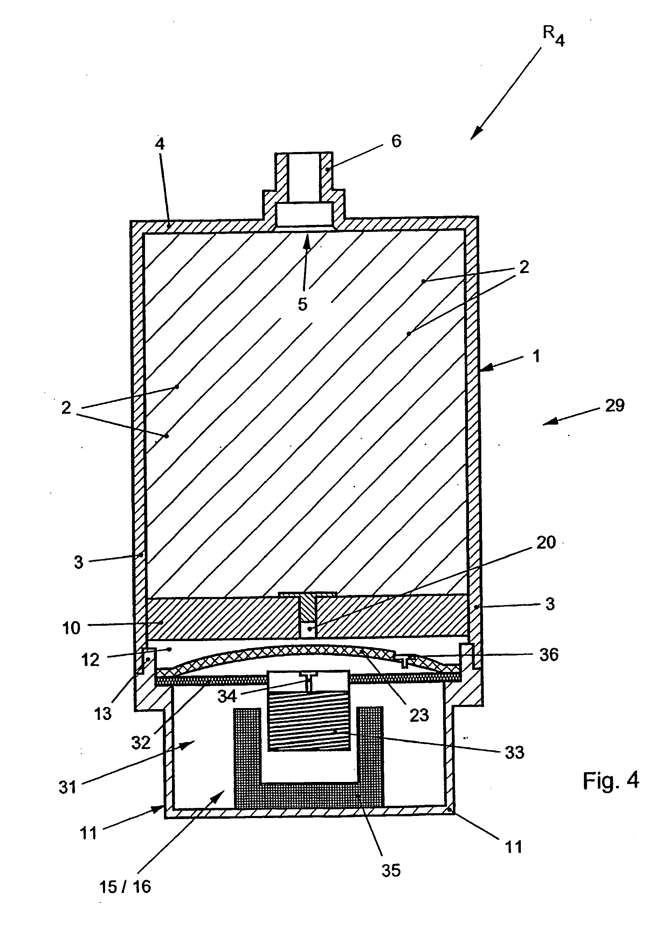

In einem noch weiteren Ausführungsbeispiel der vorliegenden Erfindung gemäss Figur 4 ist eine Vorrichtung R₄ aufgezeigt, die in etwa dem Ausführungsbeispiel gemäss Figur 2a entspricht. Anstelle eines mechanischen Kompressors 16 ist als Druckluftquelle 15 ein Membrankompressor 31 in das Gehäuse 11 eingesetzt, wobei eine Membran 32 mit integrierter Spule 33 und einem Einlassventil 34 sich vorzugsweise an das gewölbt ausgebildete Deckelelement 23 des Gehäuses 1 oszillierend und aktiviert über einen ansteuerbaren Magneten 35 anlegt, um den Druckraum 12 über ein Auslassventil 36 mit Druckluft zu versorgen. Die Funktionsweise des vorliegenden Ausführungsbeispiels entspricht dann der oben beschriebenen Weise.

### Bezugszeichenliste

| | | | | | |
|---|---|---|---|---|---|
| 1 | Behälter | 34 | Eeinlassventil | 67 | |
| 2 | Reifendichtmittel | 35 | Magnet | 68 | |
| 3 | Behälterwand | 36 | Auslassventil | 69 | |
| 4 | Stirnwand | 37 | | 70 | |
| 5 | Auslaasöffnung | 38 | | 71 | |
| 6 | Auslass | 39 | | 72 | |
| 7 | Schlauch | 40 | | 73 | |
| 8 | Reifenventil | 41 | | 74 | |
| 9 | Reifen | 42 | | 75 | |
| 10 | Kolbenelement | 43 | | 76 | |
| 11 | Gehäuse | 44 | | 77 | |
| 12 | Druckraum | 45 | | 78 | |
| 13 | Steg | 46 | | 79 | |
| 14 | Verbindungsleitung | 47 | | | |
| 15 | Druckluftquelle | 48 | | | |
| 16 | Kompressor | 49 | | | |
| 17 | Energiequelle | 50 | | R₁ | Vorrichtung |
| 18 | Verachlusselement | 51 | | R₂ | Vorrichtung |
| 19 | Ventil | 52 | | R₃ | Vorrichtung |
| 20 | Kolbendurchlass | 53 | | R₄ | Vorrichtung |
| 21 | Ventilfläche | 54 | | | |
| 22 | Flansch | 55 | | | |
| 23 | Deckelelement | 56 | | | |
| 24 | Elektromotor | 57 | | | |
| 25 | Schalter | 58 | | | |
| 26 | Druckanzeige | 59 | | | |
| 27 | Dichtelement | 60 | | | |
| 28 | Drucksensor | 61 | | | |
| 29 | Einheit | 62 | | | |
| 30 | Rotationsverdichter | 63 | | | |
| 31 | Membrankompressor | 64 | | | |
| 32 | Membran | 65 | | | |
| 33 | Spule | 66 | | | |

## Patentansprüche

1. Vorrichtung zum Ausbringen von Luft und/oder Reifendichtmittel (2) aus einem Behälter (1) in einen Reifen (9) eines Fahrzeuges beliebiger Art, wobei dem Behälter (1) zum Ausbringen von Reifendichtmittel (2) ein Kolbenelement (10) zugeordnet ist,
**dadurch gekennzeichnet,**
**dass** einem stirnseitigen Bereich des Behälters (1) fest oder wieder lösbar ein Gehäuse (11) aufsitzt, wobei zwischen Gehäuse (11) und einer Aussenseite des Kolbenelementes (10) innerhalb des Behälters (1) ein geschlossener Druckraum (12) gebildet ist und ein Druckluftbehälter zum Aufnehmen von komprimierter Luft oder Kompressor (16) als Druckluftquelle (15) in das Gehäuse (11) integriert eingesetzt ist.

2. Vorrichtung nach Anspruch 1, **dadurch gekennzeichnet, dass** das Kolbenelement (10) hydraulisch, pneumatisch, mechanisch oder elektromechanisch gegen eine Auslassöffnung (5) bewegbar ist.

3. Vorrichtung nach Anspruch 1 oder 2, **dadurch gekennzeichnet, dass** die Auslassöffnung (5) stirnseitig im Behälter (1) vorgesehen ist und im Behälter (1) zwischen einem Auslass (6) und Kolbenelement(10) das Reifendichtmittel (2) eingelagert ist.

4. Vorrichtung nach wenigstens einem der Ansprüche 1 bos 3, **dadurch gekennzeichnet, dass** durch Beaufschlagung des Druckraumes (12) mittels Druck über ein Medium Luft zum Ausbringen von Reifendichtmittel (2) aus dem Behälter (1) das Kolbenelement (10) gegen die Auslassöffnung (5) bewegbar ist.

5. Vorrichtung nach wenigstens einem der Ansprüche 1 bis 4, **dadurch gekennzeichnet, dass** das Gehäuse (11) mit integrierter Druckluftquelle (15) als Kompressor (16) und aufsetzbarem Behälter (1) mit Reifendichtmittel (2) und integriertem Kolbenelement (10) eine Einheit(29) zum Ausbringen von Luft und/oder Reifendichtmittel (2) in einen Reifen (9) eines beliebigen Fahrzeuges bilden.

6. Vorrichtung nach wenigstens einem der Ansprüche 1 bis 5, **dadurch gekennzeichnet, dass** innerhalb des Gehäuses (11) als Druckluftquelle (15) der Kompressor (16), angetrieben über einen Elektromotor (24) eingesetzt ist.

7. Vorrichtung nach wenigstens einem der Ansprüche 1 bis 5, **dadurch gekennzeichnet, dass** in das Gehäuse (11) als Druckluftquelle (15) ein Membrankompressor (31) eingesetzt ist, welcher über einen beliebigen Aktuator eine Membran (32) zur Erzeugung des Druckes für den Druckraum (12) antreibt.

8. Vorrichtung nach wenigstens einem der Ansprüche 1 bis 10, **dadurch gekennzeichnet, dass** im Gehäuse (11) als Druckluftquelle (15) ein Rotationsverdichter (30) und ein Antrieb als Elektromotor (24) zur Erzeugung von komprimierter Luft eingesetzt ist.

9. Vorrichtung nach wenigstens einem der Ansprüche 1 bis 5, **dadurch gekennzeichnet, dass** im Gehäuse (11) ein Druckbehälter zur Aufnahme von komprimierter Luft als Druckluftquelle (15) eingesetzt ist, wobei über ein Ventil (19) eine Verbindung zum Druckraum (12) zur Bewegung des Kolbenelementes (10) gegen die Auslassöffnung (5) schaltbar ist.

10. Vorrichtung nach Anspruch 9, **dadurch gekennzeichnet, dass** der Druckbehälter mit einem gasförmigen Medium, auch Luft wiederbefüllbar ist.

11. Vorrichtung nach wenigstens einem der Ansprüche 1 bis 10, **dadurch gekennzeichnet, dass** dem Kolbenelement (10) ein Ventil (19) zugeordnet ist.

12. Vorrichtung nach Anspruch 11, **dadurch gekennzeichnet, dass** das Ventil (19) des Kolbenelementes (10) in etwa auf die Auslassöffnung (5) des Behälters (1) fluchtend ausgerichtet ist.

13. Vorrichtung nach Anspruch 11 oder 12, **dadurch gekennzeichnet, dass** nach einem vollständigen Entleeren des Behälters (1) durch Bewegen des Kolbens gegen die Auslassöffnung (5) und nach Anschlagen des Kolbens (10) stirnseitig innen an den Behälter (1) im Bereich einer Stirnwand (4) das Ventil (19) zum Ausbringen von komprimierter Luft sich aus dem Kolben (10) löst und eine Verbindung zwischen Druckraum (12) und Auslass (6) freigibt.

14. Vorrichtung nach Anspruch 12 oder 13, **dadurch gekennzeichnet, dass** sich das Ventil (19) nach Entleeren des Behälters (1) durch Erhöhung des Druckes im Druckraum (12) mittels der Druckluftquelle (15), insbesondere des Kompressors (16), öffnet.

15. Vorrichtung nach wenigstens einem der Ansprüche 1 bis 14, **dadurch gekennzeichnet, dass** die Druckluftquelle (15), insbesondere der Kompressor (16), elektrisch betrieben ist und über eine Verbindungsleitung an eine Energiequelle (17) bzw, einen Zigarettenanzünder eines Fahrzeuges anschliessbar ist.

16. Vorrichtung nach wenigstens einem der Ansprüche 5 bis 15, **dadurch gekennzeichnet, dass** die Einheit (29), gebildet aus Behälter (1) mit Reifendichtmittel (2) und Kolbenelement (10) sowie das mit dem Behälter (1) verbundene Gehäuse (11) unter Aufnahme zumindest einer Druckluftquelle (15) passgenau in einen herkömmlichen Einbauraum eines beliebigen Fahrzeuges für herkömmliche Einfüllsysteme, bestehend aus Kompressor (16) und separatem Behälter (1) für Reifendichtmittel (2), einsetzbar ist.

17. Vorrichtung nach Anspruch 16, **dadurch gekennzeichnet, dass** die Einheit (29) aus Gehäuse (11) mit integrierter Druckluftquelle (15) und Behälter (1) in einen Teil des herkömmlichen Einbauraums passgenau einsetzbar ist.

18. Vorrichtung nach wenigstens einem der Ansprüche 1 bis 17, **dadurch gekennzeichnet, dass** die Druckluftquelle (15), insbesondere der Kompressor (16), einen separat bedienbaren Ausgang zum Bereitstellen von Druckluft zuschaltbar aufweist.

19. Vorrichtung nach wenigstens einem der Ansprüche 1 bis 18, **dadurch gekennzeichnet, dass** der Behälter (1) und das Kolbenelement (10) querschnittlich rund, oval, mehreckig, rechteckig oder quadratisch ausgebildet ist.

## Claims

1. Device for discharging air and/or tire sealant (2) from a container (1) into a tire (9) of any type of vehicle, the container (1) being assigned a piston element (10) for discharging tire sealant (2), **characterized in that** a housing (11) is seated in a fixed or re-releasable manner on an end region of the container (1), a closed pressure chamber (12) being formed within the container (1), between the housing (11) and an outer side of the piston element (10), and a compressed-air vessel for accommodating compressed air or compressor (16) is integrated as compressed-air source (15) in the housing (11).

2. Device according to Claim 1, **characterized in that** the piston element (10) can be moved hydraulically, pneumatically, mechanically or electromechanically toward an outlet opening (5).

3. Device according to Claim 1 or 2, **characterized in that** the outlet opening (5) is provided on the end side of the container (1), and the tire sealant (2) is accommodated in the container (1) between an outlet (6) and the piston element (10).

4. Device according to at least one of Claims 1 to 3, **characterized in that** the piston element (10) can be moved toward the outlet opening (5) by virtue of the pressure chamber (12) being subjected to pressure via a medium, air, for the purpose of discharging tire sealant (2) from the container (1).

5. Device according to at least one of Claims 1 to 4, **characterized in that** the housing (11) with integrated compressed-air source (15), in the form of a compressor (16), and attachable container (1) with tire sealant (2) and integrated piston element (10) form a unit (29) for discharging air and/or tire sealant (2) into a tire (9) of any type of vehicle.

6. Device according to at least one of Claims 1 to 5, **characterized in that** the compressor (16), driven via an electric motor (24), is incorporated as compressed-air source (15) within the housing (11).

7. Device according to at least one of Claims 1 to 5, **characterized in that** a diaphragm compressor (31) is incorporated as compressed-air source (15) in the housing (11) and, via any desired actuator, drives a diaphragm (32) for generating the pressure for the pressure chamber (12).

8. Device according to at least one of Claims 1 to 5, **characterized in that** a rotary compressor (30) is incorporated as compressed-air source (15) in the housing (11) and a drive is incorporated therein in the form an electric motor (24) for generating compressed air.

9. Device according to at least one of Claims 1 to 5, **characterized in that** a pressure vessel for accommodating compressed air is incorporated as compressed-air source (15) in the housing (11), it being possible to use a valve (19) to actuate a connection to the pressure chamber (12) for moving the piston element (10) toward the outlet opening (5).

10. Device according to Claim 9, **characterized in that** the pressure vessel can be refilled with a gaseous medium, even air.

11. Device according to at least one of Claims 1 to 10, **characterized in that** the piston element (10) is assigned a valve (19).

12. Device according to Claim 11, **characterized in that** the valve (19) of the piston element (10) is in approximate alignment with the outlet opening (5) of the container (1).

13. Device according to Claim 11 or 12, **characterized in that**, once the container (1) has been completely emptied by the piston moving toward the outlet opening (5), and once the piston (10) has struck, by way of its end side, against the inside of the container (1) in the region of an end wall (4), the valve (19), for the purpose of discharging compressed air, detaches itself from the piston (10) and releases a connection between the pressure chamber (12) and outlet (6).

14. Device according to Claim 12 or 13, **characterized in that**, once the container (1) has been emptied, the valve (19) opens as a result of an increase in the pressure in the pressure chamber (12) by means of the compressed-air source (15), in particular the compressor (16).

15. Device according to at least one of Claims 1 to 14, **characterized in that** the compressed-air source (15), in particular the compressor (16), is operated electrically and can be connected to an energy source (17) or a cigarette lighter of a vehicle via a connecting line.

16. Device according to at least one of Claims 5 to 15, **characterized in that** the unit (29) formed from the container (1) with tire sealant (2) and piston element (10) and from the housing (11), which is connected to the container (1), at least one compressed-air source (15) being accommodated in the process, can be fitted into a customary installation space provided for customary filler systems, comprising a compressor (16) and separate container (1) for a tire sealant (2), in any desired vehicle.

17. Device according to Claim 16, **characterized in that** the unit (29) comprising the housing (11), with integrated compressed-air source (15), and the container (1) can be fitted into part of the customary installation space.

18. Device according to at least one of Claims 1 to 17, **characterized in that** the compressed-air source (15), in particular the compressor (16), has a separately operable outlet for providing compressed air.

19. Device according to at least one of Claims 1 to 18, **characterized in that** the container (1) and the piston element (10) are designed to be cross-sectionally round, oval, polygonal, rectangular or square.

## Revendications

1. Dispositif pour expulser de l'air et/ou un agent colmatant de pneu (2) hors d'un récipient (1) dans un pneu (9) d'un véhicule d'un type quelconque, un élément de piston (10) étant associé au récipient (1) pour expulser l'agent colmatant de pneu (2), **caractérisé en ce**
**qu'**un boîtier (11) repose de manière fixe ou amovible sur une région frontale du récipient (1), un espace de pression fermé (12) étant formé entre le boîtier (11) et un côté extérieur de l'élément de piston (10) à l'intérieur du récipient (1) et un récipient d'air comprimé (16) en tant que source d'air comprimé (15) étant inséré sous forme intégrée dans le boîtier (11).

2. Dispositif selon la revendication 1, **caractérisé en ce que** l'élément de piston (10) peut être déplacé de manière hydraulique, pneumatique, mécanique ou électromécanique vers une ouverture de sortie (5).

3. Dispositif selon la revendication 1 ou 2, **caractérisé en ce que** l'ouverture de sortie (5) est prévue du côté frontal dans le récipient (1) et l'agent de colmatage de pneu (2) est intercalé dans le récipient (1) entre une sortie (6) et l'élément de piston (10).

4. Dispositif selon au moins l'une quelconque des revendications 1 à 3, **caractérisé en ce que**, par sollicitation de l'espace de pression (12) au moyen de pression par le biais d'air en tant que milieu pour expulser l'agent de colmatage de pneu (2) hors du récipient (1), l'élément de piston (10) peut être déplacé contre l'ouverture de sortie (5).

5. Dispositif selon au moins l'une quelconque des revendications 1 à 4, **caractérisé en ce que** le boîtier (11) avec la source d'air comprimé intégrée (15) en tant que compresseur (16) et avec le récipient (1) pouvant être posé avec l'agent de colmatage de pneu (2) et l'élément de piston intégré (10), forment une unité (29) pour expulser de l'air et/ou un agent de colmatage de pneu (2) dans un pneu (9) d'un véhicule quelconque.

6. Dispositif selon au moins l'une quelconque des revendications 1 à 5, **caractérisé en ce qu'**à l'intérieur du boîtier (11) est inséré, en tant que source d'air comprimé (15), le compresseur (16) entraîné par le biais d'un moteur électrique (24).

7. Dispositif selon au moins l'une quelconque des revendications 1 à 5, **caractérisé en ce que** dans le boîtier (11) est inséré un compresseur à membrane (31) en tant que source d'air comprimé (15), lequel entraîne une membrane (32) par le biais d'un actionneur quelconque pour produire la pression pour l'espace de pression (12).

8. Dispositif selon au moins l'une quelconque des revendications 1 à 5, **caractérisé en ce que** dans le boîtier (11), en tant que source d'air comprimé (15), un compresseur rotatif (30) et un entraînement sous forme de moteur électrique (24) sont insérés pour produire de l'air comprimé.

9. Dispositif selon au moins l'une quelconque des revendications 1 à 5, **caractérisé en ce que** dans le boîtier (11) est inséré un récipient sous pression pour recevoir de l'air comprimé en tant que source d'air comprimé (15), une connexion à l'espace de pression (12) pouvant être commutée par le biais d'une soupape (19) pour déplacer l'élément de piston (10) contre l'ouverture de sortie (5).

10. Dispositif selon la revendication 9, **caractérisé en ce que** le récipient sous pression peut être rempli à nouveau avec un milieu gazeux, comme aussi de l'air.

11. Dispositif selon au moins l'une quelconque des revendications 1 à 10, **caractérisé en ce qu'**une soupape (19) est associée à l'élément de piston (10).

12. Dispositif selon la revendication 11, **caractérisé en ce que** la soupape (19) de l'élément de piston (10) est orientée approximativement en affleurement avec l'ouverture de sortie (5) du récipient (1).

13. Dispositif selon la revendication 11 ou 12, **caractérisé en ce qu'**après une vidange complète du récipient (1) par déplacement du piston contre l'ouverture de sortie (5) et après butée du piston (10) du côté frontal à l'intérieur contre le récipient (1) dans la région d'une paroi frontale (4), la soupape (19) se détache du piston (10) pour expulser de l'air comprimé et libère une connexion entre l'espace de pression (12) et la sortie (5).

14. Dispositif selon la revendication 12 ou 13, **caractérisé en ce que** la soupape (19) s'ouvre après la vidange du récipient (1) par augmentation de la pression dans l'espace de pression (12) au moyen de la source d'air comprimé (15), en particulier du compresseur (16).

15. Dispositif selon au moins l'une quelconque des revendications 1 à 14, **caractérisé en ce que** la source d'air comprimé (15), en particulier le compresseur (16) est entraînée de manière électrique et peut être raccordée par le biais d'une conduite de connexion à une source d'énergie (17) ou à un allume-cigarette d'un véhicule.

16. Dispositif selon au moins l'une quelconque des revendications 5 à 15, **caractérisé en ce que** l'unité (29) formée du récipient (1) avec l'agent de colmatage de pneu (2) et l'élément de piston (10) ainsi que le boîtier (11) connecté au récipient (1) peuvent être insérés en recevant au moins une source d'air comprimé (15) de manière ajustée exactement dans un espace d'installation usuel d'un véhicule quelconque pour des systèmes de remplissage usuels, constitués du compresseur (16) et d'un récipient séparé (1) pour agent de colmatage de pneu (2).

17. Dispositif selon la revendication 16, **caractérisé en ce que** l'unité (29) constituée du boîtier (11) avec la source d'air comprimé intégrée (15) et le récipient (1) peut être insérée de manière ajustée exactement dans une partie de l'espace d'installation usuel.

18. Dispositif selon au moins l'une quelconque des revendications 1 à 17, **caractérisé en ce que** la source d'air comprimé (15), en particulier le compresseur (16), présente une sortie commutable pouvant être activée séparément pour fournir de l'air comprimé.

19. Dispositif selon au moins l'une quelconque des revendications 1 à 18, **caractérisé en ce que** le récipient (1) et l'élément de piston (10) sont réalisés sous forme ronde, ovale, polygonale, rectangulaire ou carrée en section transversale.
